# EUROPEAN PATENT SPECIFICATION

(11) **EP 0 808 535 B1**
(45) Date of publication and mention of the grant of the patent: **15.12.1999**
(21) Application number: 96902407.4
(22) Date of filing: 08.02.1996
(51) Int. Cl.: H04L 9/32

(54) **ELECTRONIC NEGOTIABLE DOCUMENTS**
ELEKTRONISCH VERHANDELBARE DOKUMENTE
DOCUMENTS ELECTRONIQUES NEGOCIABLES

(30) Priority: 08.02.1995 GB 9502414; 19.05.1995 GB 9510215
(43) Date of publication of application: 26.11.1997
(73) Proprietor: Cryptomathic A/S, 8000 Aarhus C (DK)
(72) Inventor: LANDROCK, Peter Cryptomathic a/s, DK-8000 Aarhus C (DK)
(74) Representative: Waldren, Robin Michael
(86) International application number: IB9600163
(87) International publication number: WO9624997

(56) References cited:
- WO-A-92/03000
- ADVANCES IN CRYPTOLOGY - CRYPTO '91. PROCEEDINGS, SANTA BARBARA, CA, USA, 11-15 AUG. 1991, ISBN 3-540-55188-3, 1992, BERLIN, GERMANY, SPRINGER-VERLAG, GERMANY, pages 324-337, XP000269038 OKAMOTO T ET AL: "Universal electronic cash"
- INTERNATIONAL CONFERENCE ON SECURE COMMUNICATION SYSTEMS, LONDON, UK, 22-23 FEB. 1984, ISBN 0-85296-288-6, 1984, LONDON, UK, IEE, UK, pages 1-4, XP000570847 DAVIES D W: "Smart cards, digital signatures and negotiable documents"
- COMPUTERS & SECURITY, AUG. 1989, UK, vol. 8, no. 5, ISSN 0167-4048, pages 399-416, XP000053012 BURK H ET AL: "Digital payment systems enabling security and unobservability"

## Description

This invention relates to methods and devices for the issue and negotiation of electronic negotiable or quasi negotiable documents (END), and is particularly relevant to systems which are sufficiently secure in open environments. The purpose is to replace paper documents such as cash, bank cheques and bills of lading with freely-transmissible electronic data.

The goal to achieve is that an electronic document - or rather, an electronic realisation of a document - at any particular time can be proved to be the (temporary) property of a particular user. This is clearly required for what is known as negotiable or quasi-negotiable documents. The most interesting examples in trading are Bills of Lading, apart from cash and cheques. The main requirement is thus that these documents be unforgeable.

With ordinary paper documents, the problem is solved by giving the original of a document certain physical attributes that are difficult to reproduce. With this precaution, it makes sense to speak of the original of a document, and define the owner simply as the person holding the original. An electronic (quasi)-negotiable document will in the following be denoted by END.

The important property required is apparently that of uniqueness. The problem is to find a suitable attribute on an electronic document which somehow would give it the property of uniqueness, explicitly or implicitly.

Obviously, the concept of an original does not make sense for electronic documents, and other (e.g. cryptographic) methods must ensure that the owner of a particular electronic document can be identified. One question is to what extent this will involve a trusted third party (TTP).

Any document of some value must initially be generated by someone, who will guarantee this value. This requires the proof of, or non-repudiation of, origin service, which is a well known art and realized using digital signatures.

The question now is how to develop a protocol to cover the situation, where an END, once issued, is to change hands. The main problem is to ensure, that the new owner is uniquely identified, or, in other words, that the seller cannot circumvent the measures and sell the same END to two different entities.

It is now generally recognized that this could only be achieved using cryptographic techniques, in the sense that violation will be detected. Further, it is necessary to use tamper resistant document carriers, such as smart cards (plastics cards containing an integrated circuit) or workstations. "Tamper-proof" or "tamper-resistant" means that the functionality of the device cannot be changed, and that any attempt to do so can be readily detected; in many cases, the device would simply be destroyed by tampering.

One obvious solution would be to introduce a trusted third party (TTP) to register at all times the possession of a particular document, but this would leave the TTP with heavily liability burdens, and is not a popular solution.

Another solution would be to represent each END with a unique chip card, but transfer of the END would necessitate physical transfer of the chip card, which in many cases would be impractical.

The only other way to provide uniqueness is physically to prohibit free copying. This would involve tamper resistance to realize a protected communication with restricted functionality, if possible.

It is known to provide an encryption technique which ensures uniqueness in the transfer of data between two devices. Such a technique is described for example in "New Directions in Cryptography", W. Diffie and M. Hellman, IEEE IT 22 (1976), 644-654. Briefly, each device stores a unique pair of codes known as the public key and the secret key. These constitute a set of matching keys with an underlying algorithm. Such algorithms include RSA and DSA, which are described respectively in U. S. patents 4 405 829 (R. Rivest, A. Shamir and L. Adleman) and 5 231 668 ("Digital Signature Algorithm", by D. Kravitz). The secret key S can be used to provide in effect a digital signature S(D) on input data D. The corresponding public key P can then be used to verify that the input for S(D) must have been S and D. Data from a seller's document carrier, for example, can be encrypted using the public key P of the buyer's document carrier, transmitted to the buyer, and then decrypted using the buyer's secret key, if the public key scheme is of encryption type.

The basic principle for achieving uniqueness here is simple but fundamental: A message encrypted under a key known to only one entity is unique, as long as it is encrypted, and establishes undisputable ownership by the mere fact that it will only be useful to the owner of the key. Only the person in possession of the right key can make any use of the document, which in effect is the property of uniqueness.

On the other hand, the only way the rightful owner can verify that the right END has been encrypted by his key is by decrypting it. But this will give him access to the message and he may subsequently be able to "sell" it to two different persons by encrypting it with their respective keys. A purpose of the invention is to provide a way of avoiding this. This requires tamper resistant hardware, perhaps a chipcard, or a hardware protected PC. In the following, this hardware and equivalent hardware will be called the DOC-carrier, or D-C when abbreviated. Its properties will be described in detail below.

"Universal Electronic Cash" by Okamoto and Ohta and published in Advance in Cryptology - CRYPTO '91. Proceedings Santa Barbara, CA, USA pages 324 - 377 (Springer Verlag, Germany) describes an electronic cash system in which a small amount of memory is required to represent one piece of electronic cash. The system also allows the seller to divide the cash balance.

The present invention provides a method issuing a END as set out in accompany claim 1, a tamper-resistant document carrier as set out in accompanying claim 9 and a method of negotiating a END between buyer and seller as set out in accompanying claims 12 and 23.

The invention provides a system with the following properties:

An END (or at least the digital signature component of the END) is generated electronically, for instance by using non-repudiation of origin, in a tamper resistant unit and then loaded onto a DOC-carrier (if not the same). As mentioned, this requires some care. It is essential that the signature thus appended to provide the non-repudiation is never disclosed. (It would of course suffice to represent the END by a hash value and the generating digital signature inside the DOC-carrier if storage is a problem). The message itself does not need to be protected.

More specifically, an END (or at least the signature component) is transferred from one DOC-carrier to another, through a public unprotected network, in such a way that
1. It can only be transferred as a meaningful document to one particular DOC-carrier, which nevertheless can be chosen from any number of registered DOC-carriers
2. Recovery is possible, if the transfer is unsuccessful
3. The protocol cannot be completed by any other device than an authorized DOC.

The system should be completely open to communication between any two DOC-carriers, without bilateral agreements.

Accordingly, the invention provides a method of issuing an END, as defined in Claim 1 below, and a document carrier suitable for use with such a method. The invention also provides methods, as defined in Claims 12 and 13, of negotiating an END between a seller and a buyer; and a method as defined in Claim 23 of splitting an END e.g. an electronic cheque or cash.

In order that the invention may be better understood, an embodiment of the invention will now be described, with reference to the accompanying drawings, in which:
Figure 1 is a diagram illustrating, by way of an overview, the negotiation of an END between two document carriers, showing the main components of the document carriers;
Figure 2 is a schematic flow diagram of the generation of an END; and

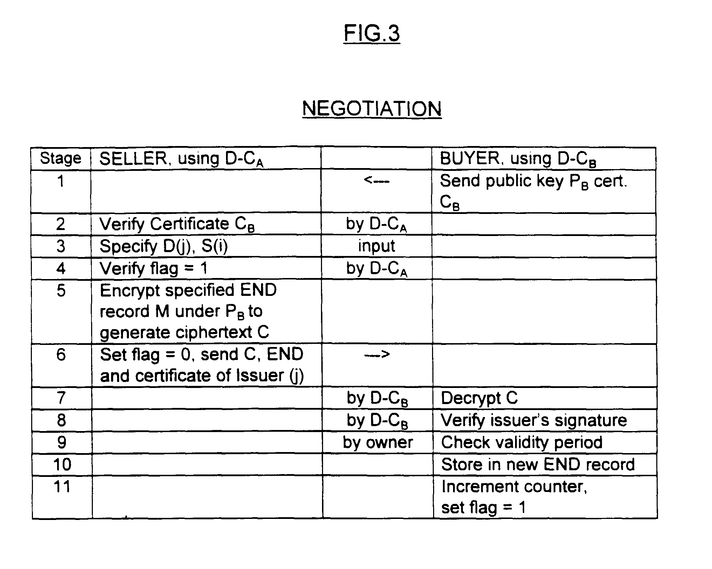

Figure 3 is a schematic flow diagram of the negotiation of an END.

Each DOC-carrier "possesses" a public key pair. The secret key of this pair must not even be known to the owner of the DOC-carrier. It would be required to realize this in such a way that not even the system provider knows the DOC-secret keys. Thus the secret key must be generated on the DOC-carrier and never leave it unprotected. The DOC-carrier itself should be freely available, but stationary, and certified by some Certification Authority along the lines of the X. 509 security architecture.

The END consists of the information as represented in an electronic message, and the corresponding digital signature, calculated by means of the secret key of the issuer and - typically - a hash value of the electronic message. The format could for instance be a special EDIFACT message for the electronic message, whereas the signature will be calculated and stored securely on the DOC-carrier.

Now, the problem is that this shall only be released through a selling process to another DOC-carrier. So the question is, how can one DOC-carrier identify another?

The most attractive solution seems to be the following approach: A trusted party called the Certification Authority CA, authorizes all DOC-carriers in the following manner: The public key of the CA is installed on the DOC-carrier, as well as the secret DOC-carrier key, in a ROM, and in such a way that the secret key cannot be disclosed. Moreover, when a document, or rather the accompanying key protected signature is entered on the DOC-carrier, the DOC-carrier software must ensure that it can only be realised again encrypted under a public key certified by the CA secret key (and verified by means of the corresponding public key on the DOC-carrier). The point behind this is that it will prevent the use of a non-authorized DOC-carrier to get access to the vital signature on an END, which defines that particular negotiable electronic document. In particular this encrypted message is useless excepted when imported into the DOC-carrier holding the corresponding secret key. It is thus important to realize that the value of the negotiable document is represented by the digital signature of the issuer.

Furthermore, and this is an essential property, such an encryption of a particular END on an individual DOC-carrier can take place only once, or rather, once a public key has been selected, it is impossible at any later stage to go through the same procedure with another public key.

Such a system would solve the problem of uniqueness in general - provided it works in practice. The difficult part, which also requires a careful analysis, is to recover from failure. In other words, the problem has been reduced to that of availability.

First of all the DOC-carrier may go down. The only way to recover from that is to have the same information on a backup DOC-carrier. This requires that a protocol is developed, which ensures that the back-up card cannot be used to sell the END to a different entity. Another possibility is to demand that whenever a back-up copy is required, the CA must be contacted.

Secondly, something may go wrong with the encryption in a selling process. This will be easy to recover from, by encrypting once again under the same public key. The use of certificates will ensure with extremely high probability that the public key used for encryption is correct.

Thirdly, something may go wrong in the data transmission from one DOC-carrier to another. But this is handled by re-transmission. The encrypted version of an END needs not be protected. In particular, a totally insecure network may be used to exchange the encrypted END.

Finally, something may go wrong in the receiving DOC-carrier. This may best be handled by a back-up card, with special procedures for recovery.

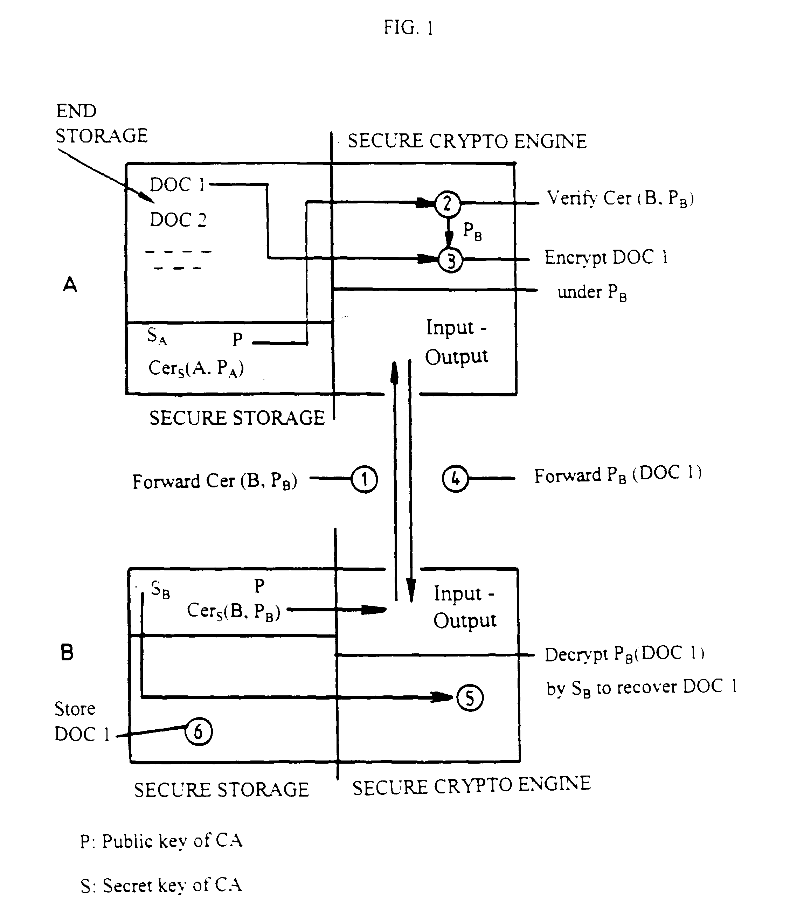

The functionality of the DOC-carrier is explained in Figure 1. With the notation of the discussion above, this gives an overview of the design of a DOC-carrier.

The general principle of the protocol between two DOC-carriers A and B is represented in the following sequence, the numerical stages 1 to 6 of which are shown in Figure 1:
1. The certificate of B is forwarded to A
2. A verifies the certificate of B

If this is successful,
3. A encrypts the relevant electronic END (or rather, the defining signature) with the public key of B and
4. forwards this to B
5. B decrypts with its secret key S_{B} and is now the owner of the END
6. B stores the END (or rather, the defining signature) as DOC 1.

The main content of DOC 1 may be transmitted separately from one workstation to another; it does not matter that there may be insufficient memory in the DOC-carrier for the whole of DOC 1, because it is only necessary to store and encrypt the signature portion.

The following is a more detailed description of the generation and negotiation of an END.

The basic protocol for issuing an END and for negotiating that END from its original document carrier to subsequent document carriers is described in the annexed Tedis II B7 document. This gives examples of a document carrier in the form of a chip card containing memory and a program, in a tamper-resistant format. This document also describes the role of a Trusted Third Party in the certification of the document carriers including their original programming with public-secret key pairs, and the tracing of negotiations between document carriers. One important benefit of the present invention is that the role of the Trusted Third Party is minimized, in that it is not necessarily involved directly in the performance of a negotiation of an END between buyer and seller. In other words, no third party need be involved in the actual negotiation protocol. It is also an important benefit of the invention that each END can be negotiated only from one document carrier to one other document carrier, and only once (the system is arranged that the seller can, in future, receive the END back again, but only as a result of a genuine transaction: the system achieves this by counting the number of transactions for each END, and this is described in more detail below).

In this description, the party, such as a bank, which issues the END, is known as the issuer. The issuer has a public-secret key pair, of which the secret key is used to sign the END. The END consists of a bit string which can be read by conventional coding rules, such as ASCII characters written in English. The END is not complete until it is signed by the issuer. As indicated above, a public-secret key pair consists of a set of matching keys P and S with an underlying algorithm. A Trusted Third Party initializes the document carriers of the system, and each document carrier is initialized with a public-secret key pair for signature generation and verification, and a public-secret key pair for encryption and decryption, unique to the device. However, the two public-secret key pairs can be identical, i.e. can be used for both purposes. This depends partly on whether the document-carrier is used for issuing as well as for negotiation: the public key pair for issuing can be different from that for negotiation. Each document carrier is identified by a unique device number or identifier, referred to as the No (D-C).

Each document carrier is given to one legal person, called the owner. The buyer of an END is the document carrier in current possession of the END. The seller is the document carrier which is to take position of the END from a buyer through the protocol. The validity period of each END is the interval between the time of issue and the time that the issuer requires it to expire. The time of issue is recorded as a time stamp with the END.

As indicated above, each document carrier must be tamper resistant, with a limited functionality. It could take the form of a specially designed chip card, or an enhanced work station. The digital signature could typically be stored in an EEPROM, or some sufficiently protected memory.

The Trusted Third Party (TTP) has its own public-secret key pair, of which the public key P is installed on each document carrier. Further, a certificate, consisting of a digital signature of the device number No (D-C) and of the public key of the document carrier, is installed on the document carrier, for each of its public key pairs.

In the case of bank cheques for example, an electronic "water mark" is added to each END upon creation.

Normally, the document carrier upon which the END is issued has the electronic watermark stored on it, for addition to the END upon issue.

In the detailed description which follows of the issue and negotiation of an END, reference is made to the hash value of data. This refers to a technique described for example in ISO/IEC IS 10118, "Information Technology-Security Techniques-Hash Functions". The hash function is a representative abbreviation of the original data, and it is used where the hardware dictates economy in the use of storage space. For example, chip cards at present are unable to store much data, and the hash value is used to reduce the amount of encrypted data to be stored.

Examples of END include electronic cash, in which the issuer is called a "Bank", with special equipment for issuing ENDs; here, the document carriers are used for negotiation, not issue. A further example is electronic bank cheques, in which each document carrier comes with a watermark of the Trusted Third Party (again called the "Bank") and each document carrier may be an issuer. A further example is the bill of lading, which is similar to the example of bank cheques, but need not necessarily have watermarks. The same applies to bills of exchange.

Various back-up procedures are possible in any instance, and the TTP involved will then have a copy of the keys of the document carriers. As the buyer always receives the END encrypted under the public key of the device, it will keep copies of the received encrypted information for later recovery by means of the TTP. Thus the negotiation can be recovered later once decryption becomes possible. Alternatively, each document carrier is formed with a duplicate, complete with the unique public-secret key pair (S), certificate and device number; the device number identifies the device which is being backed up by the duplicate. One possibility for this is to have one chip card with two chips, but a more secure solution is to have two independent chip cards or other work stations. Whenever a negotiation takes place, the protocol is duplicated with the backup document carrier. If the primary document carrier should break down, the back up is authorized to sell to the issuer after the expiration time of the END's which could not be negotiated. In this case, the TTP needs only to keep a copy of the back up device secret key.

A preferred feature for electronic bank cheques is the so-called "splitting" of a purchased cheque. A purchased cheque may be split into two by means of two digital signatures by the buyer. The document carrier verifies that the total amount of the two split parts adds up to the amount of the original. A digital signature is generated by the document carrier and the two separate parts can then be negotiated individually. Subsequently, buyers will have to authenticate not only the issuing signature but also the splitting signature.

The split is performed in the following manner: the original END, as represented in the document carrier of the current owner, may be split into two or several numbered versions, the sum of their values adding up to the value of the original. A split version consists of the original, together with some information such as its value and sequence number, and this is signed with the secret key of the document carrier. If the document carrier has the status of an issuer, the original issuing signature may be deleted to save space.

Any END could be split, even for example a bill of lading, in which case the information could include attributes such as quantities of goods as well as, or instead of, monetary value. An oil cargo for example could be divided, and the electronic bill of lading split accordingly.

With reference now to Figure 1, an END is issued on a document carrier D-Cj. The content of an END is generated freely in an unprotected environment by any issuer, and the certificate of the issuer is contained in the END together with a time stamp indicating the time of issue. A hash value h1 of fixed bit length is created from the certificated END plus the time stamp, and this is provided as an input to the document carrier.

In the example of bank cheques given in the Annex "Mandate - final report", the document carrier is initialised by one or more banks. The banks personalise the D-C for the user by recording the user's account number etc. and enabling the user to issue a specific number of electronic cheques drawn on that account - these are ENI's (electronic negotiable instruments). The same D-C can be initialised by several banks for respective accounts, and it is an "electronic cheque book".

To create an ENI, the user puts his D-C into a smart-card reader connected to his PC, and he fills in details such as value, payee, period of validity, which appear as blank spaces on his PC screen, adjacent the bank details which appear automatically. The user transfers the message or a hash value of it onto his D-C where it is signed.

At the initiation of the user, therefore, the document carrier performs certain functions which are beyond the control of the user. Specifically, the document carrier adds its device number D(j), which is in one-to-one correspondence with the public key of the device used for verification of digital signatures generated by the device. This device number could form part of the certificate, or it could be for example the upper bits of the public key after the most significant 1. The document carrier then appends the sequential serial number S(i) for the END. In the case of the END being bank cheques, or if otherwise required, the document carrier also appends the watermark WM, which is a bit sequence identifying a certain party such as a bank.

The concatenation of this data is then, if necessary, hashed to produce a hash value h2. The data or the hash value of the data are then signed by the secret key of the document carrier, to produce Sj(h2). This signed value is stored adjacent to the other concatenated data. Next, the document carrier appends to this data the value of a serial counter, set to zero; and the value of a one bit flag, set to one, indicative of whether the END is currently negotiable (value 1) or non negotiable (value 0) from the particular document carrier.

The END has thereby been issued, and made ready for negotiation with another document carrier certified as being part of the system.

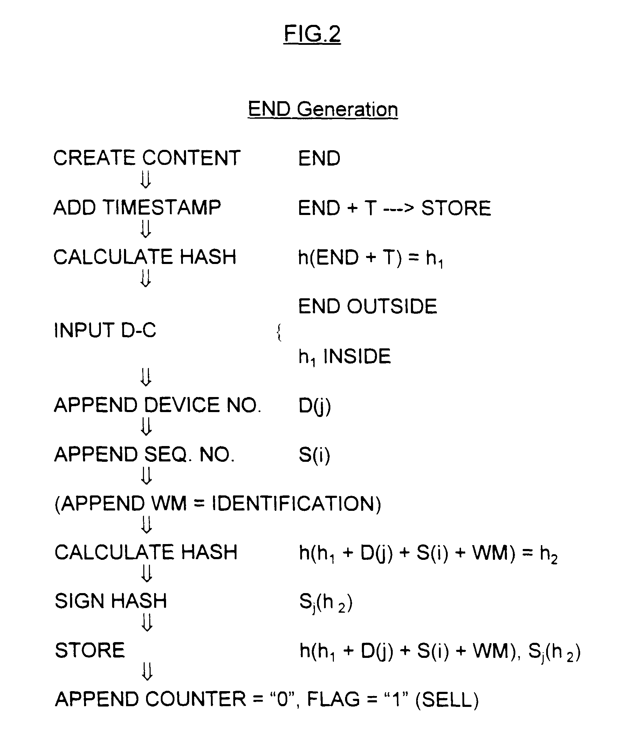

The negotiation of this END originating from document carrier D-Cj, between a seller document carrier D-C_{A} and a buyer document carrier D-C_{B} will now be described with reference to Figure 2.

The negotiation involves the seller and the buyer, and may involve a TTP as well, but for tracing only. The seller, which may possess many different ENDs, decides to sell this particular END to the buyer Br. The seller first authenticates the buyer, in Stage 1, by receiving from it the certificate C_{B}, corresponding to the unique public key P_{B} of the document D-C_{B}. It is transmitted over a public channel in an open environment.

The program on the seller's document carrier D-C_{A} checks, in Stage 2, whether the certificate C_{B} is authenticated, and aborts the negotiation if not. It then extracts the public key P_{B} for future encryption. The seller identifies the negotiability status flag of the particular END it wishes to sell, accessing it, in Stage 3, with the device number D(j) and the END serial number S(i). It then checks in Stage 4 that the flag is 1, and if not it aborts the negotiation. If the END is shown to be negotiable, then further action is not denied, and the full END record or message M is encrypted by means of the public key P_{B}, and sent over the public channel to the buyer.

To ensure that the seller cannot repeat the negotiation of the same END, the negotiability status flag is set to zero, in Stage 6.

On receipt of the encrypted message or ciphertext C corresponding to message M, the buyer decrypts the information using its own secret key S_{B}: this provides the original message M=S_{B}(C). The buyer also requests and receives, in Stage 6, the certificate of the issuer Cer(D-Cj), and the hash value of the original content of the END, and in Stages 7 and 8 it decrypts the message M from the ciphertext C, and it verifies the signature Sj(h2) and the device number D(j) of the issuer. If verification should fail, the buyer informs the issuer and ceases negotiation.

The buyer then checks the timestamp T of the END, and informs the issuer and aborts the negotiation if the timestamp indicates expiration of validity of the END.

The buyer then returns to the seller, through the same open channel, an acknowledgement in the form of a digital signature on the concatenation of the serial number of the END, the generating signature and the counter. It is accompanied by its own certificate C_{B}. A copy may also be returned to the issuer for tracing purposes.

The seller D-C_{B} verifies the acknowledgment and then outputs the result for information to the seller. The same thing happens at the issuer, if applicable.

In Stage 10, the received information, i.e. the hash value of the content of the END, the device number of the generating END, the serial number of the END, the generating signature and the counter, which is incremented by 1 in Stage 11, is then stored in a new record. It is important to increment the counter, so that each document carrier can recognize that the END has undergone a further negotiation, allowing it to return to a previous document carrier.

The negotiability status flag is then set to 1, to indicate that this END, with this particular counter, has become negotiable.

After a number of negotiations, the END will be presented to the issuer for settlement, whether it is a cheque or cash or whatever. The settlement involves electronic tracing effectively in the reverse direction back to the original issue.

Whilst a specific example has been given to illustrate the different inventions claimed in the following claims, it will be appreciated that the objects of the invention can be realized in different forms, using different software or different hardware. The various different features which have been described in this specification are not all essential, but we claim separate inventions in all possible combinations of such features, within the scope of the claims. For example, although the method of issuing an END and then negotiating that END from the issuing document carrier to a buying document carrier is not claimed separately, this is intended to be a separate invention. Further, features such as the ability to recover from failure, although not claimed specifically, are intended to constitute an invention when combined with other features which are claimed specifically.

## Claims

1. A method of issuing an electronic negotiable document (END) comprising: creating as data (DOC 1) an END and storing this in a tamper-resistant document carrier (A), the document carrier containing a unique public-secret key pair (S) for signing and verifying and a unique document carrier identifier D(j); signing the unique document-carrier identifier, the END and an END identifier (S(i)) using the secret key of the public-secret key pair and storing the result in the document carrier.

2. A method according to claim 1 of issuing an END, further comprising generating a time stamp (T) representing the time of issue and storing this with the END in the tamper-resistant document carrier before the encryption step.

3. A method according to claim 1 or 2 of issuing an END, including the step of calculating a hash value (h₁) of the END and/or the time stamp value and storing this hash value instead of the full END in the tamper-resistant document carrier, before the said encryption step.

4. A method according to any preceding claim of issuing an END, in which the document carrier identifier (D(j)) is a device number, and the END identifier is a serial number (S(i)).

5. A method according to any preceding claim of issuing an END, in which the END identifier is supplemented with data representing a water mark (WM) unique to the issuer.

6. A method according to any preceding claim of issuing an END, comprising the step of calculating a hash value (h₂) of the data to be encrypted by the said secret key, in place of the full data.

7. A method according to any preceding claim of issuing an END, in which the document carrier stores a negotiability status flag (FLAG) indicative of whether the END stored therein is negotiable or non-negotiable, and including the step of setting the flag to "negotiable" after the result of the encryption has been stored in the document carrier.

8. A method according to any preceding claim of issuing an END, in which the document carrier includes a counter (COUNTER) for counting a serial number, indicative of the number of times that the END has been negotiated since issue, and comparing the step of setting the counter to zero after the result of the encryption has been stored in the document carrier.

9. A tamper-resistant document carrier adapted to store an END, the document carrier containing a unique public-secret key pair (S) for signing and verifying and a unique document carrier identifier D(j); means for encrypting the unique document-carrier identifier, the END and an END identifier (S(i)) using the secret key of the public-secret key pair and means for storing the result in a memory of the document carrier.

10. A document carrier according to claim 9, in which the memory includes a negotiability status flag (FLAG) capable of being set either to "negotiable" or "non-negotiable".

11. A document carrier according to claim 9 or claim 10, in which the memory includes a counter (COUNTER) for storing a serial number representative of the number of times the END has been negotiated.

12. A method of negotiating an END between a seller and a buyer each possessing a tamper-resistant document carrier (A; B) having its own public-secret key pair (P_{A}, S_{A}; P_{B}, S_{B}), in which the END is stored in the seller's document carrier (A) in the form of END data (DOC 1), and the signature generated by the secret signing-key of a document carrier of the issuer of the END, together with a negotiability status flag (FLAG) indicative of whether the END is currently negotiable from the document carrier on which it is stored, comprising establishing mutual recognition between the seller and buyer using a predetermined protocol between the respective document carriers, verifying (Fig.3, step 4) in the seller's document carrier that the negotiability status flag is "negotiable" and aborting the negotiation if not, sending the public encryption key of the buyer's document carrier to the seller's document carrier, and using it to encrypt (Fig. 3, step 5) the message comprising the END together with the negotiabilty status flag, sending that encrypted message to the buyer, decrypting (Fig. 3, step 7) that message using the buyer's secret decryption key, and setting (Fig. 3, steps 11 and 6) the negotiability flag for that END of the buyer's and the seller's document carriers respectively to "negotiable" and "non-negotiable".

13. A method of negotiating an END between a seller and a buyer each possessing a tamper-resistant document carrier (A; B) having its own public-secret key pair (P_{A}, S_{A}; P_{B}, S_{B}), in which the END is stored in the seller's document carrier (A) in the form of END data (DOC 1), and the signature generated by the secret signing key of a document carrier of the issuer of the END, together with a serial number counter (COUNTER) indicative of the number of times that the END has been negotiated since issue, comprising establishing mutual recognition between seller and buyer using a predetermined protocol between their respective document carriers, verifying in the seller's document carrier that the END, if it has been stored previously in that document carrier, has a different counter value this time and is therefore negotiable, but aborting the negotiation if it is not negotiable, sending (Fig. 3, step 1) the public encryption key of the buyer's document carrier to the seller's document carrier, and using it to encrypt (Fig. 3, step 5) the message comprising the END together with the counter, sending that encrypted message to the buyer, decrypting (Fig. 3, step 7) that message using the buyer's secret decryption key, and incrementing the counter by one (Fig. 3, step 11).

14. A method according to claim 12 or claim 13, in which each document carrier is installed originally with a certificate comprising a digital signature of its unique identifier (D(j)) and of its public key (P_{A}, P_{B}).

15. A method according to claim 14, in which the certificate unique to the document carrier on which the END was originally issued is stored with the END in the seller's document carrier.

16. A method as claimed in claim 14 or 15, in which the certificate of the buyer's document carrier is sent (Fig. 3, step 1) to the seller's document carrier in which it is authenticated and the negotiation is aborted if authentication fails.

17. A method according the any of claims 12 to 16, in which the buyer's document carrier, after decrypting the message using the secret key, verifies the signature of the issuer on the END, and informs the issuer in the event that authentication fails.

18. A method according to any of claims 1 to 8 of issuing an END on a document-carrier followed by a method of negotiating the END as claimed in any of claims 12 to 17.

19. A method according to claim 18 as appendant to claim 2, in which the buyer's document carrier (B), after decrypting the message with its secret key (S_{B}), verifies (Fig.3, step 9) that the END is still valid by taking its time stamp (T), and, if it has expired, informs the issuer of this, and aborts the negotiation before incrementing the counter or setting the negotiation status flag.

20. A method according to any of the claims 12 to 19 including recovering the negotiation of an END which has previously broken down, by providing the buyer's document-carrier with the necessary secret key which has been reproduced by the issuer or by a trusted third party.

21. A method according to any of Claims 12 to 19 including recovering an END lost from a primary document-carrier, by activating a back-up document-carrier which has previously been provided with back-up data reproduced from the primary document-carrier.

22. A method according to Claim 20 or 21, comprising inhibiting the recovery until the expiry of the predetermined period of validity of the END.

23. A method of negotiating an END, sold by a seller to a buyer, in which the buyer splits the END electronically into two or more parts and then negotiates those parts separately to one or more further buyers.

24. A method according to claim 23, in which each part is subjected to the digital signature of the said buyer's document carrier which effects the splitting.

## Patentansprüche

1. Verfahren zum Ausgeben eines elektronischen verhandelbaren Dokuments (END) mit den Schritten: Erzeugen eines END als Daten (DOC 1) und Speichern desselben in einem fälschungssicheren Dokumententräger (A), wobei der Dokumententräger ein eindeutiges, vor der Öffentlichkeit geheimes Schlüsselpaar (S) zum Unterzeichnen und Überprüfen und einen eindeutigen Dokumententrägerbezeichner (D(j)) enthält;
Unterzeichnen des eindeutigen Dokumententrägerbezeichners, des END und eines END-Bezeichners (S(i)) unter Verwendung des geheimen Schlüssels des vor der Öffentlichkeit geheimen Schlüsselpaares; und
Speichern des Ergebnisses im Dokumententräger.

2. Verfahren nach Anspruch 1 zum Ausgeben eines END, ferner mit den Schritten: Erzeugen eines Zeitstempels (T), der die Ausgabezeit darstellt, und Speichern desselben mit dem END in einem fälschungssicheren Dokumententräger vor dem Verschlüsselungsschritt.

3. Verfahren nach Anspruch 1 oder 2 zum Ausgeben eines END mit den Schritten: Berechnen eines Hash-Wertes (h₁) des END und/oder des Zeitstempelwertes und Speichern dieses Hash-Wertes anstelle des vollen END in einem fälschungssicheren Dokumententräger vor dem Verschlüsselungsschritt.

4. Verfahren nach einem der vorhergehenden Ansprüche zum Ausgeben eines END, in dem der Dokumententrägerbezeichner (D(j)) eine Vorrichtungsnummer ist und der END-Bezeichner eine Seriennummer (S(i)) ist.

5. Verfahren nach einem der vorhergehenden Ansprüche zum Ausgeben eines END, wobei der END-Bezeichner mit Daten ergänzt wird, die ein Wasserzeichen (WM) darstellen, das für den Herausgeber eindeutig ist.

6. Verfahren nach einem der vorhergehenden Ansprüche zum Ausgeben eines END, mit dem Schritt: Berechnen eines Hash-Wertes (h₂) der mit dem geheimen Schlüssel zu verschlüsselnden Daten anstelle der vollen Daten.

7. Verfahren nach einem der vorhergehenden Ansprüche zum Ausgeben eines END, wobei der Dokumententräger ein Verhandlungsstatusflag (FLAG) speichert, das anzeigt, ob das in ihm gespeicherte END verhandelbar oder nicht verhandelbar ist, und mit dem Schritt: Setzen des Flags auf "verhandelbar", nachdem das Ergebnis der Verschlüsselung im Dokumententräger gespeichert worden ist.

8. Verfahren nach einem der vorhergehenden Ansprüche zum Ausgeben eines END, wobei der Dokumententräger einen Zähler (COUNTER) zum Zählen einer Seriennummer aufweist, der anzeigt, wie oft das END seit der Ausgabe verhandelt worden ist, und Vergleichen des Schrittes des Setzens des Zählers auf null, nachdem das Ergebnis der Verschlüsselung im Dokumententräger gespeichert worden ist.

9. Fälschungssicherer Dokumententräger, der geeignet ist, ein END zu speichern, wobei der Dokumententräger enthält: ein eindeutiges, vor der Öffentlichkeit geheimes Schlüsselpaar (S) zum Unterzeichnen und Überprüfen und einen eindeutigen Dokumententrägerbezeichner (D(j)); eine Einrichtung zum Verschlüsseln des eindeutigen Dokumententrägerbezeichners, des END und eines END-Bezeichners (S(i)) unter Verwendung des geheimen Schlüssels des vor der Öffentlichkeit geheimen Schlüsselpaares und eine Einrichtung zum Speichern des Ergebnisses in einem Speicher des Dokumententrägers.

10. Dokumententräger nach Anspruch 9, wobei der Speicher ein Verhandelbarkeitsstatusflag (FLAG) aufweist, das entweder auf "verhandelbar" oder "nicht verhandelbar" gesetzt werden kann.

11. Dokumententräger nach Anspruch 9 oder 10, wobei der Speicher einen Zähler (COUNTER) zum Speichern einer Seriennummer aufweist, wie oft das END verhandelt worden ist.

12. Verfahren zum Verhandeln eines END zwischen einem Verkäufer und einem Käufer, die jeweils einen fälschungssicheren Dokumententräger (A; B) besitzen, der sein eigenes, vor der Öffentlichkeit geheimes Schlüsselpaar (P_{A}, S_{A}; P_{B}, S_{B}) aufweist, wobei das END im Dokumententräger des Verkäufers (A) in Form von END-Daten (DOC 1) gespeichert ist, und die Unterschrift, die von dem geheimen Unterzeichnungsschlüssel eines Dokumententrägers des Herausgebers des END erzeugt wird, zusammen mit einem Verhandelbarkeitsstatusflag (FLAG), das anzeigt, ob das END gegenwärtig vom Dokumententräger, auf dem es gespeichert ist, verhandelbar ist, mit den Schritten: Herstellen gegenseitiger Anerkennung zwischen dem Verkäufer und dem Käufer unter Verwendung eines vorbestimmten Protokolls zwischen den jeweiligen Dokumententrägern, Überprüfen (Fig. 3, Schritt 4) im Dokumententräger des Verkäufers, ob das Verhandelbarkeitsstatusflag "verhandelbar" ist, und Abbrechen der Verhandlung, wenn nicht, Senden des öffentlichen Verschlüsselungsschlüssels des Dokumententrägers des Käufers an den Dokumententräger des Verkäufers und Verwenden desselben, um die Nachricht zu verschlüsseln (Fig. 3, Schritt 5), die das END zusammen mit dem Verhandelbarkeitsstatusflag aufweist, und Senden dieser verschlüsselten Nachricht an den Käufer, Entschlüsseln (Fig. 3, Schritt 7) dieser Nachricht unter Verwendung des geheimen Verschlüsselungsschlüssels der Käufers und Setzen (Fig. 3, Schritte 11 und 6) des Verhandelbarkeitsflags für dieses END der Dokumententräger des Käufers und des Verkäufers auf "verhandelbar" bzw. "nicht verhandelbar".

13. Verfahren zum Verhandeln eines END zwischen einem Verkäufer und einem Käufer, die jeweils einen fälschungssicheren Dokumententräger (A; B) besitzen, der sein eigenes, vor der Öffentlichkeit geheimes Schlüsselpaar (P_{A}, S_{A}; P_{B}, S_{B}) aufweist, wobei das END im Dokumententräger des Verkäufers (A) in Form von END-Daten (DOC 1) gespeichert ist, und die Unterschrift, die von dem geheimen Unterzeichnungsschlüssel eines Dokumententrägers des Herausgebers des END erzeugt wird, zusammen mit dem Seriennummernzähler (COUNTER), der anzeigt, wie oft das END seit der Herausgabe verhandelt worden ist, mit den Schritten: Herstellen gegenseitiger Anerkennung zwischen Verkäufer und Käufer unter Verwendung eines bestimmten Protokolls zwischen deren jeweiligen Dokumententrägern, Überprüfen im Dokumententräger des Verkäufers, ob das END, wenn es vorher in diesem Dokumententräger gespeichert worden ist, diesmal einen anderen Zählerwert hat und deshalb verhandelbar ist, jedoch Abbrechen der Verhandlung, wenn es nicht verhandelbar ist, Senden (Fig. 3, Schritt 1) des öffentlichen Verschlüsselungsschlüssels des Dokumententrägers des Käufers an den Dokumententräger des Verkäufers und Verwenden desselben, um die Nachricht zu verschlüsseln (Fig. 3, Schritt 5), die das END aufweist, zusammen mit dem Zähler, Senden dieser verschlüsselten Nachricht an den Käufer, Entschlüsseln (Fig. 3, Schritt 7) dieser Nachricht unter Verwendung des geheimen Verschlüsselungsschlüssels des Käufers und Inkrementieren des Zählers um eins (Fig. 3, Schritt 11).

14. Verfahren nach Anspruch 12 oder 13, wobei jeder Dokumententräger ursprünglich mit einem Zertifikat installiert ist, das eine digitale Unterschrift seines eindeutigen Bezeichners (D(j)) oder seines öffentlichen Schlüssels (P_{A}, P_{B}) aufweist.

15. Verfahren nach Anspruch 14, wobei das Zertifikat, das für den Dokumententräger eindeutig ist, auf dem das END ursprünglich ausgegeben wurde, mit dem END im Dokumententräger des Verkäufers gespeichert wurde.

16. Verfahren nach Anspruch 14 oder 15, wobei das Zertifikat des Dokumententrägers des Käufers an den Dokumententräger des Verkäufers gesendet wird (Fig. 3, Schritt 1), in dem es authentifiziert wird, und die Verhandlung abgebrochen wird, wenn die Authentifizierung nicht erfolgreich ist.

17. Verfahren nach einem der Ansprüche 12 bis 16, wobei der Dokumententräger des Käufers, nachdem die Nachricht unter Verwendung des geheimen Schlüssels entschlüsselt worden ist, die Unterschrift des Herausgebers auf dem END bestätigt und den Herausgeber in dem Fall, wo die Authentifizierung nicht erfolgreich ist, informiert.

18. Verfahren nach einem der Ansprüche 1 bis 8 zum Ausgeben eines END auf einem Dokumententräger, gefolgt von einem Verfahren zum Verhandeln des END nach einem der Ansprüche 12 bis 17.

19. Verfahren nach Anspruch 18 als Zusatz von Anspruch 2, wobei der Dokumententräger des Käufers (B) nach der Entschlüsselung der Nachricht mit seinem geheimen Schlüssel (S_{B}) überprüft (Fig. 3, Schritt 9), ob das END noch gültig ist, indem sein Zeitstempel (T) herangezogen wird, und wenn er abgelaufen ist, den Herausgeber darüber informiert und die Verhandlung abbricht, bevor der Zähler inkrementiert oder das Verhandlungsstatusflag gesetzt wird.

20. Verfahren nach einem der Ansprüche 12 bis 19 mit dem Schritt: Wiederaufnehmen der Verhandlung eines END, die vorher abgebrochen worden ist, durch Bereitstellung des Dokumententrägers des Verkäufers mit einem notwendigen Geheimschlüssel, der vom Herausgeber oder von einer betrauten dritten Partei reproduziert worden ist.

21. Verfahren nach Anspruch 12 bis 19, mit den Schritten: Wiedergewinnen des END, das aus einem primären Dokumententräger verlorengegangen ist, durch Aktivieren eines Sicherungsdokumententrägers, der vorher mit Sicherungsdaten bereitgestellt worden ist, die aus dem primären Datenträger reproduziert worden sind.

22. Verfahren nach Anspruch 20 oder 21, mit dem Schritt: Sperren der Wiedergewinnung bis zum Ablauf der vorbestimmten Gültigkeitsperiode des END.

23. Verfahren zum Verhandeln eines END, das von einem Verkäufer an einen Käufer verkauft worden ist, wobei der Käufer das END elektronisch in zwei oder mehr Teile teilt und diese Teile dann getrennt an einen oder mehrere weitere Käufer überträgt.

24. Verfahren nach Anspruch 23, wobei jedes Teil von einer digitalen Unterschrift des Dokumententrägers des Käufers, der die Teilung bewirkt, abhängig ist.

## Revendications

1. Procédé de délivrance d'un document négociable électronique (END) comprenant:
la création en tant que données (DOC 1) d'un END et son stockage dans un support de document résistant à la falsification (A), le support de document contenant une unique paire de clés publique-secrète (S) pour la signature et la vérification et un unique identificateur de support de document (D(j));
la signature de l'unique identificateur de support de document, de l'END et d'un identificateur d'END (S(i)) en utilisant la clé secrète de la paire de clés publique-secrète: et
le stockage du résultat dans le support de document.

2. Procédé selon la revendication 1 de délivrance d'un END, comprenant en outre:
la génération d'un timbre temporel (T) qui représente l'instant de délivrance et son stockage avec l'END dans le support de document résistant à la falsification avant l'étape de cryptage.

3. Procédé selon la revendication 1 ou 2 de délivrance d'un END, incluant l'étape de calcul d'une valeur de contrôle (hachage) (h₁) de l'END et/ou de la valeur de timbre temporel et de stockage de cette valeur de contrôle en lieu et place de l'END complet dans le support de document résistant à la falsification avant ladite étape de cryptage.

4. Procédé selon l'une quelconque des revendications précédentes de délivrance d'un END, dans lequel l'identificateur de support de document (D(j)) est un numéro de dispositif et l'identificateur d'END est un numéro de série (S(i)).

5. Procédé selon l'une quelconque des revendications précédentes de délivrance d'un END, dans lequel l'identificateur d'END est complété par des données qui représentent un filigrane (WM) unique pour l'entité de délivrance.

6. Procédé selon l'une quelconque des revendications précédentes de délivrance d'un END, comprenant l'étape de calcul d'une valeur de contrôle (h₂) des données à crypter au moyen de ladite clé secrète en lieu et place des données complètes.

7. Procédé selon l'une quelconque des revendications précédentes de délivrance d'un END, dans lequel le support de document stocke un indicateur d'état de possibilité de négociation (FLAG) indicatif de si l'END stocké dedans est négociable ou non négociable et incluant l'étape d'établissement de l'indicateur à 'négociable' après que le résultat du cryptage a été stocké dans le support de document.

8. Procédé selon l'une quelconque des revendications précédentes de délivrance d'un END, dans lequel le support de document inclut un compteur (COUNTER) pour compter un numéro de série, qui est indicatif du nombre de fois où l'END a été négocié depuis sa délivrance et la comparaison de l'étape d'établissement du compteur à zéro après que le résultat du cryptage a été stocké dans le support de document.

9. Support de document résistant à la falsification adapté pour stocker un END, le support de document contenant une unique paire de clés publique-secrète (S) pour la signature et la vérification et un unique identificateur de support de document (D(j)); des moyens pour crypter l'unique identificateur de support de document, l'END et un identificateur d'END (S(i)) en utilisant la clé secrète de la paire de clés publique-secrète et des moyens pour stocker le résultat dans une mémoire du support de document.

10. Support de document selon la revendication 9, dans lequel la mémoire inclut un indicateur d'état de possibilité de négociation (FLAG) qui peut être établi soit à 'négociable', soit à 'non négociable'.

11. Support de document selon la revendication 9 ou 10, dans lequel la mémoire inclut un compteur (COUNTER) pour stocker un numéro de série représentatif du nombre de fois où l'END a été négocié.

12. Procédé de négociation d'un END entre un vendeur et un acheteur dont chacun possède un support de document résistant à la falsification (A; B) comportant sa propre paire de clés publique-secrète (P_{A}, S_{A}; P_{B}, S_{B}), dans lequel l'END est stocké dans le support de document de vendeur (A) sous la forme constituée par des données d'END (DOC 1), et la signature générée au moyen de la clé de signature secrète d'un support de document de l'entité de délivrance de l'END, en association avec un indicateur d'état de possibilité de négociation (FLAG) indicatif de si oui ou non l'END est présentement négociable en provenance du support de document sur lequel il est stocké, comprenant l'établissement d'une reconnaissance mutuelle entre le vendeur et l'acheteur en utilisant un protocole prédéterminé entre les supports de document respectifs, la vérification (figure 3, étape 4) dans le support de document de vendeur du fait que l'indicateur d'état de possibilité de négociation est à 'négociable' et l'abandon de la négociation si ce n'est pas le cas, l'envoi de la clé de cryptage publique du support de document d'acheteur au support de document de vendeur et son utilisation pour crypter (figure 3, étape 5) le message constitué par l'END en association avec l'indicateur d'état de possibilité de négociation, l'envoi de ce message crypté à l'acheteur, le décryptage (figure 3, étape 7) de ce message en utilisant la clé de décryptage secrète d'acheteur et l'établissement (figure 3, étapes 11 et 6) de l'indicateur de possibilité de négociation pour ce END des supports de documents d'acheteur et de vendeur respectivement à 'négociable' et à 'non négociable'.

13. Procédé de négociation d'un END entre un vendeur et un acheteur dont chacun possède un support de document résistant à la falsification (A; B) comportant sa propre paire de clés publique-secrète (P_{A}, S_{A}; P_{B}, S_{B}), dans lequel l'END est stocké dans le support de document de vendeur (A) sous la forme constituée par des données d'END (DOC 1), et la signature générée au moyen de la clé de signature secrète d'un support de document de l'entité de délivrance de l'END, en association avec un compteur de numéro de série (COUNTER) indicatif du nombre de fois où l'END a été négocié depuis sa délivrance, comprenant l'établissement d'une reconnaissance mutuelle entre le vendeur et l'acheteur en utilisant un protocole prédéterminé entre leurs supports de document respectifs, la vérification dans le support de document de vendeur du fait que l'END, s'il a été stocké préalablement dans ce support de document, présente une valeur de compteur différente à cet instant et est par conséquent négociable, mais l'abandon de la négociation s'il n'est pas négociable, l'envoi (figure 3, étape 1) de la clé de cryptage publique du support de document d'acheteur au support de document de vendeur et son utilisation pour crypter (figure 3, étape 5) le message constitué par l'END en association avec le compteur, l'envoi de ce message crypté à l'acheteur, le décryptage (figure 3, étape 7) de ce message en utilisant la clé de décryptage secrète d'acheteur et l'incrémentation du compteur d'une unité (figure 3, étape 11).

14. Procédé selon la revendication 12 ou 13. dans lequel chaque support de document est constitué originellement avec un certificat comprenant une signature numérique de son unique identificateur (D(j)) et de sa clé publique (P_{A}, P_{B}).

15. Procédé selon la revendication 14, dans lequel le certificat unique pour le support de document sur la base duquel l'END a été délivré originellement est stocké avec l'END dans le support de document de vendeur.

16. Procédé selon la revendication 14 ou 15, dans lequel le certificat du support de document d'acheteur est envoyé (figure 3, étape 1) au support de document de vendeur où il est authentifié et la négociation est abandonnée si l'authentification est en échec.

17. Procédé selon l'une quelconque des revendications 12 à 16, dans lequel le support de document d'acheteur, après décryptage du message en utilisant la clé secrète, vérifier la signature de l'entité de délivrance sur l'END et informe l'entité de délivrance dans l'éventualité où l'authentification est en échec.

18. Procédé selon l'une quelconque des revendications 1 à 8 de délivrance d'un END dans un support de document suivi par un procédé de négociation de l'END selon l'une quelconque des revendications 12 à 17.

19. Procédé selon la revendication 18 lorsqu'elle dépend de la revendication 2, dans lequel le support de document d'acheteur (B), après décryptage du message à l'aide de sa clé secrète (S_{B}). vérifie (figure 3, étape 9) que l'END est toujours valide en consultant son timbre temporel (T) et si celui-ci est expiré, il informe l'entité de délivrance de ce fait et il abandonne la négociation avant d'incrémenter le compteur ou d'établir l'indicateur d'état de négociation.

20. Procédé selon l'une quelconque des revendications 12 à 19, incluant la reprise de la négociation d'un END qui a été rompue préalablement en munissant le support de document d'acheteur de la clé secrète nécessaire qui a été reproduite par l'entité de délivrance ou par une tierce partie mandatée.

21. Procédé selon l'une quelconque des revendications 12 à 19, incluant la reprise d'un END perdu au niveau d'un support de document primaire en activant un support de document de secours qui a été préalablement muni de données de secours reproduites à partir du support de document primaire.

22. Procédé selon la revendication 20 ou 21, comprenant l'inhibition de la reprise jusqu'à l'expiration de la période de validité prédéterminée de l'END.

23. Procédé de négociation d'un END, vendu par un vendeur à un acheteur, dans lequel l'acheteur sépare l'END électroniquement en deux parties ou plus puis négocie ces parties séparément avec un ou plusieurs autres acheteurs.

24. Procédé selon la revendication 23, dans lequel chaque partie est soumise à la signature numérique dudit support de document d'acheteur qui effectue la séparation.
